# DEMANDE DE BREVET EUROPEEN

(11) **EP 2 317 045 A1**
(43) Date de publication de la demande: **04.05.2011**
(21) Numéro de dépôt: 10306157.8
(22) Date de dépôt: 22.10.2010
(51) Int. Cl.: E05C 9/00

(54) **Dispositif de fixation d'une tringle de manoeuvre en C**

(30) Priorité: 29.10.2009 FR 0957613; 03.11.2009 FR 0957773
(71) Demandeur: Ferco International Ferrures et Serrures de Batiment, 57445 Reding (FR)
(72) Inventeur: Strassel, Richard, F-57930, BERTHELMING (FR)
(74) Mandataire: Rhein, Alain

(57) **Abrégé**

L'invention concerne un dispositif de fixation d'une tringle de manoeuvre en C (2) dans une rainure d'encastrement (3), notamment en feuillure de menuiserie, comportant un sabot de guidage (11) surmontant une embase de fixation (12) et pourvu, de part et d'autre d'un plan médian longitudinal (P), d'un rebord d'accrochage (14, 15) apte à coopérer avec une rainure d'accrochage (9, 10) en face arrière (24) de ladite tringle en C (2). Tout particulièrement, ce dispositif de fixation comporte une fente longitudinale (16) définissant au moins deux lames (17 ; 18), respectivement de part et d'autre dudit plan longitudinal (P), ces lames (17, 18) étant, d'une part, mobiles entre elles, au moins dans leur partie supérieure, ceci suivant une direction perpendiculaire ou sensiblement perpendiculaire à ce plan médian (P) et, d'autre part, soumises à des moyens de rappel élastiques tendant à les repousser l'une par rapport à l'autre dans cette direction perpendiculaire ou sensiblement perpendiculaire au plan P.

## Description

L'invention concerne un dispositif de fixation d'une tringle de manoeuvre en C dans une rainure d'encastrement, notamment en feuillure de menuiserie, comportant un sabot de guidage surmontant une embase de fixation et pourvu, de part et d'autre d'un plan médian longitudinal, d'un rebord d'accrochage apte à coopérer avec une rainure d'accrochage en face arrière de ladite tringle en C.

La présente invention concerne le domaine de la quincaillerie du bâtiment et a trait, plus particulièrement, aux dispositifs de fixation d'une crémone ou crémone-serrure en feuillure de menuiserie.

D'une manière usuelle, une crémone ou crémone-serrure comporte un boîtier principal au-dessus et/ou en-dessous duquel s'étendent des tringles de manoeuvre pour la commande d'organes de verrouillage. Une telle crémone ou crémone-serrure est très souvent logée, de manière encastrée, dans une rainure appropriée ménagée en feuillure de menuiserie, le plus fréquemment d'un vantail de porte ou fenêtre.

Habituellement, la où les tringles de manoeuvre sont protégées par une têtière venant refermer cette rainure d'encastrement à l'intérieur de laquelle elles sont amenées à se déplacer. Dans ce cas, la fixation de cette crémone ou crémone-serrure sur la menuiserie intervient au moyen de vis de fixation traversant la têtière pour venir se loger, en fond de rainure, dans l'épaisseur de cette menuiserie. La ou les tringles comportent, elles, des ouvertures oblongues au droit de ces passages des vis de fixation dans la têtière, ceci pour préserver leur mobilité entre les positions de verrouillage et de déverrouillage.

Il est d'ailleurs également connu des dispositifs de guide-vis conçus aptes à être rapportés à l'arrière d'une telle têtière assurant par ailleurs le guidage par rapport à cette dernière de la ou des tringles de manoeuvre tout en facilitant la pose de la vis de fixation. Notamment, ce guide-vis favorise une pose à l'équerre de cette vis de fixation qui, sans quoi, pourrait gêner les déplacements de cette ou ces tringles de manoeuvre.

A ce propos, la rainure d'encastrement en feuillure de menuiserie adopte, usuellement, une forme en T. Ainsi, en fond de rainure celle-ci présente une largeur moindre ajustée à la largeur de la ou des tringles de manoeuvre. Contrairement, du côté de son ouverture, cette rainure est d'une largeur plus importante ajustée à la largeur de la têtière. Ainsi, celle-ci vient en applique sur des rebords d'appui que comportent les parois délimitant latéralement ladite rainure.

Il est de plus en plus courant de concevoir des crémones ou crémones-serrures ne comportant pas une telle têtière apte à refermer la rainure d'encastrement au niveau de la menuiserie en y abritant la ou les tringles de manoeuvre. Dans un tel cas de figure, la ou les tringles de manoeuvre font office, en même temps, de têtière en prenant position dans la rainure en lieu et place de cette dernière. Ainsi, cette ou ces tringles de manoeuvre, de largeur plus importante, adoptent, fréquemment, une structure en C permettant l'accrochage de cette ou ces tringles de manoeuvre sur des dispositifs de fixation appropriés conçus aptes à coopérer avec la menuiserie.

Plus particulièrement, de tels dispositifs de fixation comportent, usuellement, un sabot de guidage de section ajustée pour pouvoir être engagé dans la rainure que délimite, au niveau de sa face arrière, la ou les tringles de manoeuvre. Sous ce sabot de guidage s'étend une embase de fixation conçue pour être engagée dans la rainure d'encastrement en feuillure de menuiserie. Habituellement, cette embase de fixation sert de guide-vis et comporte, par conséquent, une ouverture de passage d'une vis de fixation prévue pour venir se loger dans l'épaisseur de la menuiserie, en fond de rainure. Au droit de l'emplacement d'un tel dispositif de fixation, la tringle de manoeuvre comporte, elle aussi, une ouverture pour le passage de la vis de fixation. Toutefois cette ouverture est de section suffisante pour laisser passer la tête de la vis de fixation. Celle-ci vient donc traverser cette tringle de manoeuvre pour coopérer avec l'embase du dispositif de fixation en laissant libre en déplacement ladite tringle de manoeuvre.

Finalement, de tels dispositifs de fixation connus doivent être pré-montés le long de la tringle de manoeuvre avant la pose de la crémone ou crémone-serrure sur la menuiserie. Ce pré-montage est fastidieux et contraignant, puisqu'il faut enfiler ces dispositifs de fixation depuis une extrémité dans une tringle de manoeuvre, sans compter que même en présence de moyens d'indexation de leur position le long de cette dernière, ces dispositifs de fixation sont susceptibles de se déplacer avant qu'intervienne cette pose de la crémone ou crémone-serrure.

Il existe par ailleurs des dispositifs de fixation qui, au lieu d'être enfilés depuis l'extrémité d'une tringle de manoeuvre, peuvent être posés le long de cette dernière par emboîtement et rotation. Plus exactement le sabot de guidage, de section généralement parallélépipédique, comporte, le long d'au moins une diagonale, une section inférieure à la largeur de l'ouverture de la rainure que définit, en face arrière, la tringle en C. Ainsi, dans un premier temps ce sabot de guidage peut être emboîté dans cette tringle, sachant que par rotation on amène ensuite les deux rebords d'accrochage latéraux que comporte ce sabot de guidage en coopération avec les deux rainures ou rebords d'accrochage latéraux que délimitent les bords latéraux repliés de cette tringle en C.

Si les dispositifs de fixation qui doivent être enfilés depuis une extrémité dans une tringle de manoeuvre posent des problèmes de contrainte de montage et de mobilité relative par rapport à cette tringle, avant la pose de la crémone ou crémone serrure, les dispositifs de fixation conçus pour être emboîtés puis fixés par rotation le long de cette dernière, n'offrent qu'une tenue relative à l'égard d'une tentative d'arrachement de la tringle de manoeuvre. En effet, cette tenue est proportionnelle à la retenue que procurent les rebords d'accrochage du sabot de guidage par rapport aux bords longitudinaux repliés de la tringle en C. Autrement dit, cette retenue est proportionnelle à la qualité de l'ancrage de la tringle sur ce sabot de guidage du dispositif de fixation. Or, justement, pour pouvoir pivoter dans la rainure de la tringle en C le sabot de guidage est nécessairement de longueur réduite.

En, tant qu'état de la technique, on citera encore le document EP 1.479.862, lequel décrit un dispositif de fixation conçu pour être fixé en fond de rainure d'encastrement en feuillure de menuiserie et comportant un sabot de guidage sur lequel peut venir se clipper une tringle de manoeuvre. Celle-ci, de structure en U, comporte, sous une face avant, deux ailes parallèles prévues pour venir s'engager dans la rainure d'encastrement de la menuiserie et pourvues, en bordure d'extrémité libre, d'un rebord d'accrochage à même de coopérer avec des rainures de guidage que comporte précisément le sabot de guidage de ce dispositif de fixation.

Ainsi, c'est dans le cadre d'une démarche inventive que l'on a imaginé un dispositif de fixation expansible pour permettre son montage le long d'une tringle par emboîtement, sa liaison par rapport à cette dernière résultant d'un effet d'expansion après cet emboîtement. Dans le cadre d'une seconde démarche inventive, on a pensé annihiler ce caractère expansible de ce dispositif de fixation, une fois emboîté sur une tringle, pour éviter tout déboitement.

L'on comprend qu'en raison de cette propriété du dispositif de fixation, en particulier du sabot à venir s'écarter dans la tringle, il peut adopter une longueur quelconque, apte à procurer une résistance à l'arrachement suffisante.

A cet effet, l'invention concerne un dispositif de fixation d'une tringle de manoeuvre en C dans une rainure d'encastrement, notamment en feuillure de menuiserie, comportant un sabot de guidage surmontant une embase de fixation et pourvu, de part et d'autre d'un plan médian longitudinal, d'un rebord d'accrochage apte à coopérer avec une rainure d'accrochage en face arrière de ladite tringle en C, caractérisé par le fait qu'il comporte une fente longitudinale définissant au moins deux lames, respectivement de part et d'autre dudit plan médian longitudinal, ces lames étant, d'une part, mobiles entre elles, au moins dans leur partie supérieure, ceci suivant une direction perpendiculaire ou sensiblement perpendiculaire à ce plan médian et, d'autre part, soumises à des moyens de rappel élastique tendant à les maintenir repoussées l'une par rapport à l'autre dans cette direction perpendiculaire ou sensiblement perpendiculaire au plan médian P.

Selon encore une autre particularité de la présente invention, ce dispositif de fixation comporte encore des moyens escamotables de blocage des lames dans leur position active, écartée l'une par rapport à l'autre, pour maintenir un écartement entre les rebords d'accrochage du sabot de guidage supérieur à la largeur de l'ouverture délimitée par les retours d'accrochage que comporte dans sa partie arrière la tringle en C.

En somme, une fois emboîtés sur une tringle de manoeuvre, ces moyens empêchent le resserrement des rebords d'accrochage du sabot de guidage. Ce resserrement ne peut intervenir qu'à travers l'intervention d'une personne habilitée.

On obtient bien, ainsi, un parfait ancrage de la tringle de manoeuvre sur un tel dispositif de fixation.

D'autres buts et avantages de la présente invention apparaîtront au cours de la description qui va suivre se rapportant à un exemple de réalisation illustré dans les dessins ci-joints dans lesquels :
- la figure 1 est une représentation schématisée et en coupe transversale d'un dispositif de fixation selon l'invention sur lequel est monté une tringle en C ;
- la figure 2 est une représentation similaire à la figure 1 illustrant le montage d'un tel dispositif de fixation sur une telle tringle ;
- les figures 3 et 4 illustrent, de manière schématisée et en perspective ce dispositif de fixation selon l'invention dans un cas associé à une tringle de manoeuvre et dans un cas indépendamment de cette tringle.

Tel que représenté dans les figures des dessins ci-joints, la présente invention concerne un dispositif de fixation 1 d'une tringle de manoeuvre en C 2, dans une rainure d'encastrement 3, notamment en feuillure de menuiserie.

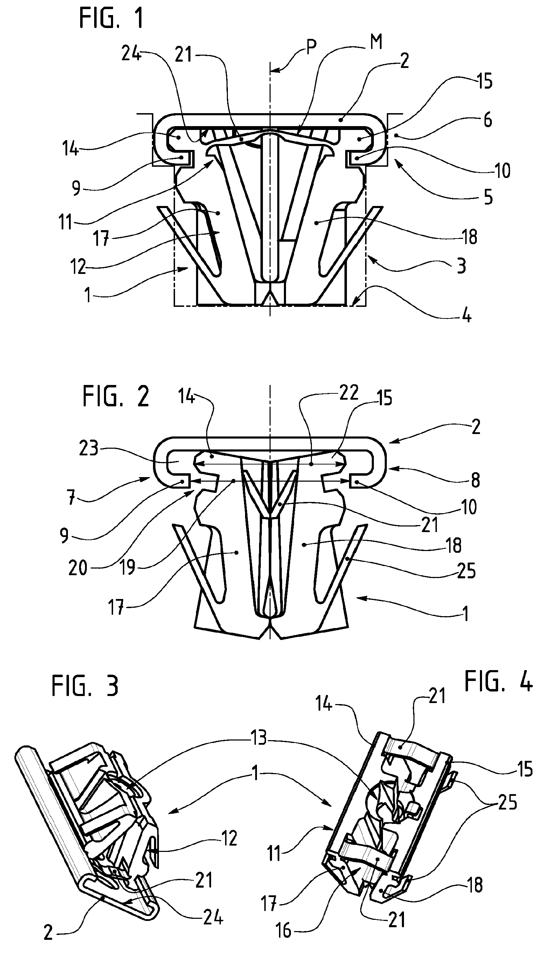

Cette rainure d'encastrement 3 a été représentée de manière schématisée et en traits discontinus dans la figure 1. En particulier, cette rainure adopte, usuellement, une structure en T et comporte une largeur moindre en direction du fond 4 de cette rainure 3 qu'à hauteur de son embouchure 5.

Une telle tringle de manoeuvre de section en forme de C est utilisée par des crémones ou crémones-serrures dépourvues de têtière. Cette tringle en C 2 prend alors position dans la rainure 3, dans sa partie la plus large 6, à savoir la place qu'occupe normalement une telle têtière.

Pour en revenir à la structure de cette tringle en C 2, elle est usuellement issue d'un feuillard métallique dont les bords longitudinaux 7, 8, ont été repliés de manière à former, à l'arrière de cette tringle 2 des retours ou rainures d'accrochage 9, 10.

Quant au dispositif de fixation 1, il comporte un sabot de guidage 11 sur lequel peut être engagée et guidée ladite tringle 2, ce sabot 11 surmontant une embase de fixation 12 prévue pour s'étendre dans la rainure 3.

Préférentiellement, le sabot 11 et l'embase de fixation 12 sont traversés par au moins une ouverture 13 de passage d'une vis de fixation.

Plus particulièrement, le sabot de guidage 11 comporte, de part et d'autre d'un plan médian longitudinal P un rebord d'accrochage 14, 15 prévu pour s'étendre et coopérer avec l'un des retours ou rainures d'accrochage 9, 10 de la tringle en C 2.

Selon une particularité de l'invention, sensiblement dans le plan longitudinal P, ledit sabot de guidage 11 et, au moins en partie sur sa hauteur, l'embase de fixation 12, sont fendus. Ainsi, ce dispositif de fixation 1 comporte une fente longitudinale 16 délimitant, de part et d'autre de son plan médian longitudinal P, au moins des lames, respectivement, 17 et 18. Celles-ci peuvent être solidarisées l'une de l'autre, en partie inférieure de l'embase de fixation 12. Elles sont par ailleurs mobiles entre elles, au moins dans leur partie supérieure, ceci suivant une direction perpendiculaire ou sensiblement perpendiculaire au plan médian P. De plus, elles sont soumises à des moyens de rappel élastique tendant à les maintenir repoussées l'une par rapport à l'autre dans cette direction perpendiculaire ou sensiblement perpendiculaire au plan médian P. Si ces moyens de rappel élastique peuvent emprunter la forme d'un ressort interposé entre lesdites lames 17, 18, ils sont préférentiellement définis par le matériau de nature élastique concevant le dispositif de fixation et, plus particulièrement, le matériau assurant la liaison entre ces lames 17, 18 dans leur partie inférieure. Ainsi, ledit dispositif de fixation peut être conçu en matériau synthétique.

Avantageusement, ces lames 17, 18 confèrent une section sensiblement en V à ce dispositif de fixation 1. Ainsi, par resserrement élastique des lames 17, 18 à hauteur de leur extrémité supérieure, on peut réduire l'écartement entre les rebords d'accrochage 14, 15 du sabot de guidage 11 et l'ajuster à la largeur 19 de l'ouverture 20, délimitée par les retours d'accrochage 9, 10 à l'arrière de la tringle en C 2. Aussi, ce sabot de guidage 11 peut être engagé par emboîtement dans cette dernière. A cet instant, l'action sur les lames 17, 18 peut être relâchée, permettant, sous l'impulsion des moyens de rappel élastique, aux rebords d'accrochage 14, 15, de venir s'engager dans lesdites rainures d'accrochage 9, 10.

De manière avantageuse, ce dispositif de fixation 1 comporte encore des moyens M escamotables de blocage des lames 17, 18 dans leur position active, écartée l'une par rapport à l'autre, pour maintenir un écartement entre les rebords d'accrochage 14, 15 du sabot de guidage supérieur à la largeur 19 de l'ouverture 20 délimitée par les retours d'accrochage 9, 10 à l'arrière de la tringle en C 2.

Ainsi, au travers de ces moyens de blocage escamotables M, on vient éviter que la tringle en C 2 ne se dégage d'un tel dispositif de fixation après la pose de la crémone ou crémone serrure sur la menuiserie.

Selon un mode de réalisation avantageux, ces moyens de blocage escamotables M sont constitués par au moins une languette de liaison 21 souple et/ou repliable reliant les lames 17, 18, d'un côté et de l'autre du plan médian P, préférentiellement dans leur partie supérieure donc à hauteur du sabot de guidage 11. Plus précisément, cette ou ces languettes 21 s'étendent perpendiculairement au plan médian P et sont définies aptes à se replier ou à se cintrer dans une direction parallèle à ce plan P.

Par ailleurs, la longueur d'une telle languette 21 est déterminée pour permettre aux rebords d'accrochage 14, 15 du sabot de guidage 11, de s'écarter l'un de l'autre sur une distance 22 supérieure à la largeur de la rainure 23 que délimite intérieurement la tringle en C 2.

Ainsi, lorsque ce sabot de guidage 11 est engagé dans cette tringle en C 2 et que les rebords d'accrochage 14, 15 ont été repoussés, en raison du caractère élastique des lames 17, 18 dans les rainures d'accrochage 9, 10, cette ou ces languettes 21 sont nécessairement dans un état légèrement replié ou cintré.

Précisément, lors du montage du dispositif de fixation 1 sur la tringle en C 2, l'on vient s'assurer que cette ou ces languettes 21 sont repliées en direction de la face arrière 24 de cette tringle en C 2. Ainsi, lors d'une tentative de resserrement des rebords d'accrochage 14, 15, résultant d'une tentative d'arrachement de la tringle en C 2 par rapport au dispositif de fixation 1, resserrement ayant pour conséquence d'accentuer le pliage ou le cintrage d'une languette 21, celle-ci vient en butée contre cette tringle en C 2, laquelle empêche qu'une telle languette 21 se replie ou se cintre d'avantage. Cette ou ces languettes viennent par conséquent s'arcbouter entre lesdites lames 17, 18 en empêchant leur rapprochement, donc celui des rebords d'accrochage 14, 15, de manière à éviter tout décrochement inopiné de ladite tringle en C 2 du dispositif de fixation 1.

Comme visible dans les figures des dessins joints, le dispositif de fixation 1 peut ainsi être pourvu de plusieurs languettes de retenue 21 garantissant la bonne tenue du dispositif de fixation 1 par rapport à la tringle en C 2.

A noter que lors du montage, et pour faciliter le resserrement des rebords d'accrochage 14, 15, la où les languettes 21 peuvent être repliées, non pas en direction de la tringle en C 2, mais en direction de l'embase de fixation 12. Si, après montage, la ou les languettes 21 peuvent être repoussées, manuellement, au moyen d'un outil tel qu'un tournevis, au-delà de leur position d'équilibre instable, perpendiculaire au plan P, en direction de la tringle en C 2, elles retournent avantageusement dans cette position de manière automatique et par mémoire de forme, autrement dit sans intervention de l'opérateur.

Si le dispositif de fixation selon l'invention procure une meilleure tenue à l'arrachement, il est pour autant de nature démontable. En particulier, dans la tringle en C 2, est nécessairement ménagée une ouverture pour le passage de la vis de fixation, y compris de la tête de cette vis de fixation pour le logement de cette vis dans l'ouverture 13 traversant le sabot 11 et l'embase de fixation 12. Au travers de cette ouverture dans la tringle en C 2, et par déplacement de cette dernière, notamment entre les positions de verrouillage et de déverrouillage, la ou les languettes 21 peuvent être repoussées en direction inverse, c'est-à-dire au-delà de leur position d'équilibre instable vers l'embase de fixation 12 permettant, au final, le resserrement des rebords d'accrochage 14, 15 du sabot de guidage 11 et le décrochage du dispositif de fixation par rapport à la tringle en C 2.

Comme il est visible sur les figures du dessin ci-joint, à l'embase de fixation 12 peuvent être associées une ou plusieurs languettes de retenue 25 facilitant le pré-positionnement d'une tringle de manoeuvre et, donc, d'une crémone ou crémone-serrure le long de la rainure d'encastrement en feuillure de menuiserie, ceci avant la pose des vis de fixation.

D'ailleurs, selon une autre particularité de l'invention, cette vis de fixation engagée dans l'ouverture 13 traversant le sabot 11 et l'embase de fixation 12, peut, elle aussi, être définie apte à maintenir les lames 17, 18 dans une position écartée l'une de l'autre, de manière à éviter, là encore, le resserrement des rebords d'accrochage 14, 15 et leur décrochement par rapport aux rainures d'accrochage 9, 10 de la tringle en C 2.

Tel qu'il ressort de la description qui précède, le dispositif de fixation 1, selon l'invention, non seulement peut venir équiper aisément une tringle en C 2, sans qu'il soit utile de l'enfiler depuis une extrémité de cette dernière, mais, en outre, il procure une parfaite tenue à l'arrachement de la tringle qu'il est amené à maintenir et à guider.

## Revendications

1. Dispositif de fixation d'une tringle de manoeuvre en C (2) dans une rainure d'encastrement (3), notamment en feuillure de menuiserie, comportant un sabot de guidage (11) surmontant une embase de fixation (12) et pourvu, de part et d'autre d'un plan médian longitudinal (P), d'un rebord d'accrochage (14, 15) apte à coopérer avec une rainure d'accrochage (9, 10) en face arrière (24) de ladite tringle en C (2), **caractérisé par le fait qu'**il comporte une fente longitudinale (16) définissant au moins deux lames (17 ; 18), respectivement de part et d'autre dudit plan longitudinal (P), ces lames (17, 18) étant, d'une part, mobiles entre elles, au moins dans leur partie supérieure, ceci suivant une direction perpendiculaire ou sensiblement perpendiculaire à ce plan médian (P) et, d'autre part, soumises à des moyens de rappel élastiques tendant à les repousser l'une par rapport à l'autre dans cette direction perpendiculaire ou sensiblement perpendiculaire au plan P.

2. Dispositif de fixation selon la revendication 1, **caractérisé par le fait qu'**il comporte encore des moyens (M) escamotables de blocage des lames (17, 18) dans leur position active, écartées l'une par rapport à l'autre, pour maintenir un écartement entre les rebords d'accrochage (14, 15) du sabot de guidage (11) supérieur à la largeur (19) de l'ouverture (20) délimitée par les retours d'accrochage (9, 10) que comporte, dans sa partie arrière (24) en C (2).

3. Dispositif de fixation selon la revendication 2, **caractérisé par le fait que** les moyens de blocage escamotables (M) sont constitués par au moins une languette de liaison (21) souple et/ou repliable, reliant les lames (17) et (18) d'un côté et de l'autre du plan médian longitudinal (P), cette ou ces languettes (21) s'étendant perpendiculairement à ce dernier et étant définies aptes à se replier ou à se cintrer dans une direction parallèle à ce plan (P).

4. Dispositif de fixation selon la revendication 3, **caractérisé par le fait que** la longueur d'une languette (21) est déterminée pour permettre aux rebords d'accrochage (14, 15) du sabot de guidage (11), de s'écarter l'un de l'autre sur une distance (22) supérieure à la largeur de la rainure (23) que délimite intérieurement la tringle en C (2).

5. Dispositif de fixation selon la revendication 3 ou 4, **caractérisé par le fait que** la ou les languettes (21) sont susceptibles d'être repoussées dans cette direction parallèle au plan (P), d'un côté ou de l'autre d'une position d'équilibre instable perpendiculaire audit plan longitudinal (P).

6. Dispositif de fixation selon l'une quelconque des revendications précédentes, **caractérisé par le fait que** les lames (17, 18), d'un côté et de l'autre du plan médian longitudinal (P), sont rendues solidaires en partie inférieure de l'embase de fixation (12) en conférant une section sensiblement en V au dispositif de fixation (1).

7. Dispositif de fixation selon l'une quelconque des revendications précédentes, **caractérisé par le fait que** les moyens de rappel élastiques empruntent la forme d'un ressort interposé entre lesdites lames (17) et (18).

8. Dispositif de fixation selon l'une quelconque des revendications 1 à 7, **caractérisé par le fait que** les moyens de rappel élastiques sont définis par le matériau de nature élastique concevant le dispositif de fixation et assurant la liaison entre ces lames (17) et (18) dans la partie inférieure de l'embase de fixation (12).

9. Dispositif de fixation selon l'une quelconque des revendications précédentes, **caractérisé par le fait que** le sabot de guidage (11) et l'embase de fixation (12) sont traversées par au moins une ouverture (13) de passage d'une vis de fixation.

10. Dispositif de fixation selon la revendication 9, **caractérisé par le fait que** la vis de fixation engagée dans l'ouverture (13) traversant le sabot de guidage (11) et l'embase de fixation (12) est définie apte à maintenir les lames (17, 18) dans une position écartée l'une de l'autre.
